# EUROPEAN PATENT APPLICATION

(11) **EP 1 262 681 A2**
(43) Date of publication of application: **04.12.2002**
(21) Application number: 02076628.3
(22) Date of filing: 24.04.2002
(51) Int. Cl.: F16F 9/02

(54) **Gas spring**

(30) Priority: 15.05.2001 IT RE20010017 U
(71) Applicant: Pommier Furgocar S.r.l., Roncocesi, 42100 Reggio Emilia (IT)
(72) Inventor: Panciroli, Marco c/o Pommier Furgocar S.r.l., Roncocesi, 42100 Reggio Emilia (IT)
(74) Representative: Corradini, Corrado

(57) **Abstract**

A gas spring, comprising a hollow cylinder (1) which slidingly receives internally a piston (21) subjected to the action of a pressurized gas, and of which the head (13) is traversed by the piston ring by way of interposed seal means, there being provided a cleaning member (5) which is associated with the open end of the cylinder and is positioned to circumscribe the initial portion of the projecting part of the piston rod in such a manner as to detach the deposits present on it as it retracts.

## Description

This invention relates to a pneumatic device acting as a spring, commonly known as a gas spring.

Said gas springs comprise a cylinder slidingly containing a piston which is constantly urged axially by a mass of pressurized gas contained in said cylinder, and presents a piston rod which passes through the head of said cylinder via suitable interposed seal means.

A problem encountered with such gas springs derives from the fact that they have a relatively short useful life when used in particularly cold environments, i.e. at temperatures such that the moisture present therein condenses.

This is the case for example with isothermal vans and refrigerated vehicle bodies provided with rotatable and slidable walls which are used to divide the loading compartment into regions for containing different products, and are usually balanced by gas springs.

In such operative situations, i.e. under freezing conditions, on the exposed part of the piston rod of the gas spring there usually forms a film or crust of ice which tightly grips the piston rod and interferes with the seal means in the head when the piston rod is retracted.

This irreparably damages said seal means within a fairly short time, especially in consideration of the fact that said crust is normally of irregular thickness, and the fact that said irregular crust has high scraping power, and is able to cut if cracks or ruptures are present,

The main object of this invention is to provide means able to overcome said problem.

Another object of the invention is to attain said objective within the context of a simple, rational, reliable and durable construction.

These objects are attained by a gas spring presenting the characteristics indicated in the claims.

According to the invention, it comprises a cleaning member which is associated with the open end of the cylinder and is positioned to circumscribe the initial portion of the projecting part of the piston rod in such a manner as to detach the deposits present on it as it retracts into the cylinder.

Said cleaning member preferably consists of a ring of not particularly resistant material, typically bronze, brass or the like.

The said ring is preferably mounted on the piston rod as a particularly precise sliding fit.

A tolerance of the order of one hundredth of a millimetre has proved convenient, said tolerance referring to the lowest temperature present in the environment in which the gas spring is installed, for example between -20°C and-30°C in the case of refrigerated vehicle bodies.

In such situations the invention safeguards the integrity of the seal means provided in the head of the gas spring cylinder.

In this respect, when the piston rod of the gas spring retracts, any ice crust thereon encounters the ring and disintegrates, so that the piston rod is perfectly clean as it passes through said seal means.

According to the invention, between the head of the gas spring and said cleaning member there can be advantageously provided a surrounding chamber for lubricating the piston rod, and which is described in detail hereinafter.

The constructional characteristics and merits of the invention will be apparent from the ensuing detailed description, given with reference to the figures of the accompanying drawings, in which:
Figure 1 is an exploded perspective view of the invention.
Figure 2 is an assembled perspective view of the invention.
Figure 3 is the section Ill-Ill of Figure 2 on an enlarged scale.

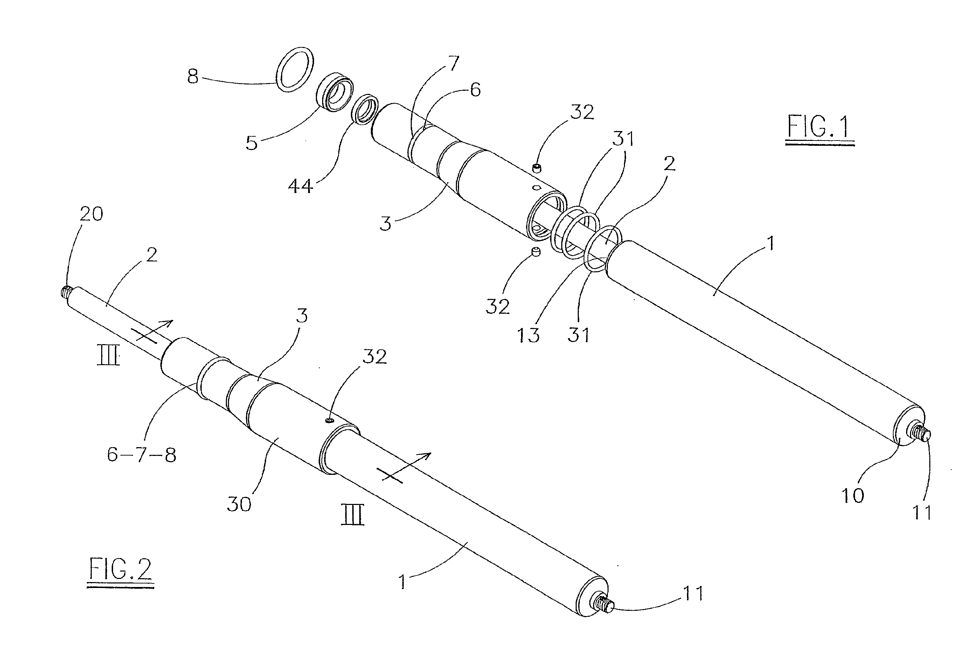

Said figures, and in particular Figures 1 and 2, show a cylinder 1 the rear end 10 of which is provided with a threaded stem 11.

A usual piston 21 is slidingly inserted into the cylinder 1 and is constantly subjected to the thrust of a mass of pressurized gas located between said piston and said rear end 10.

Said piston is provided with a piston rod 2, said rod 2 emerging from the head 13 of the cylinder 1 by way of interposed seal means 22 and terminating with a respective threaded stem 20 (see Figure 2).

According to the invention, means for cleaning the projecting part of the piston rod 2 during its retraction travel are associated with the cylinder 1. Said means comprise a coaxial sleeve 3 which is fixed at its end to the cylinder 1 and surrounds the initial portion of said projecting part of the piston rod 2.

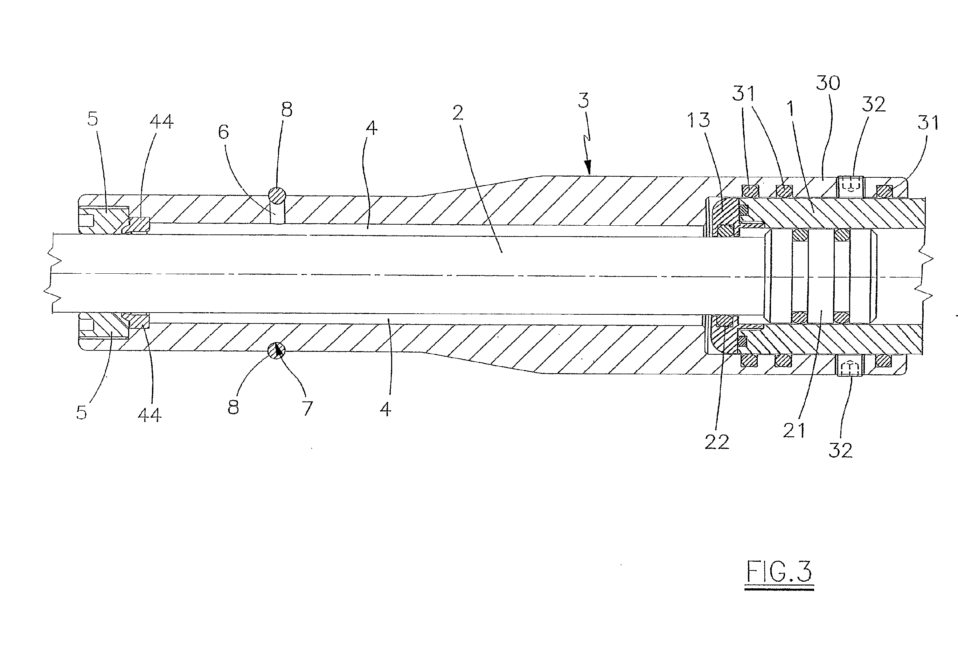

As can be seen in Figure 3, at the proximal end of said sleeve 3 there is a cylindrical skirt 30 which is mounted as an exact fit onto the front end of the cylinder 1 by way of three interposed gaskets 31 of O-ring type, and is fixed thereon by two diametrically opposing set screws positioned between said gaskets 31.

Between said sleeve 3 and said piston rod 2 there is defined an annular lubrication chamber 4 which at one end is closed by said O-ring 31 and at its other end by the gasket indicated by 44.

The gasket 44 is positioned in a respective seat provided at the distal end of the bore in the sleeve 3, and is retained thereat by a cleaning ring 5.

In Figure 3 the ring 5 is screwed into the distal end of the sleeve 3, but there is nothing to prevent it from being fixed in any other way in view of its function.

What is important is that it be formed of a material which is not particularly hard or resistant, and that it be mounted on the piston rod 2 as a particularly precise sliding fit.

The ring 5 is preferably formed of brass or bronze, or another equivalent material.

For the purposes of the invention, a tolerance of the order of one hundredth of a millimetre between the ring 5 and piston rod 2 has proved sufficient, said tolerance referring to the minimum temperature scheduled for the environment in which the gas spring is installed.

The function of said ring 5 is as already stated.

With regard to the chamber 4, this is filled with a lubricant fluid of multigrade type, i.e. able to maintain a good fluidity within a wide temperature range, in particular at low temperature, for example of the order of -30°C, for the purposes of the invention.

The chamber 4, with the oil contained therein, has two important functions. The first is to maintain the projecting part of the piston rod 2 and the seal means associated with the head 13 of the cylinder 1 constantly lubricated, in order to minimize friction between them as the rod 2 retracts, this latter having been previously cleaned by the action of the ring 5.

The second is to prevent direct exposure of said seal means to the rigid environmental conditions.

The chamber 4 (see Figures 1 and 3) is also provided with a bleed valve able to discharge to the outside any compressed gas leakages which seep through the head 13 of the cylinder 1.

Said bleed valve is in the form of at least one through radial hole 6 provided in the wall of the sleeve 3, and opening into a circumferential groove 7 formed in the outer surface of the sleeve 3, said groove 7 having a circular arc cross-section and containing in a stretched state an elastic seal ring of circular cross-section (Figure 3).

Express reference has been made hereinbefore to the use of gas springs in the context of environments characterised by freezing temperatures, however the teachings of the invention can evidently be well adapted to different situations, i.e. to all those cases in which the environmental conditions result in troublesome deposits or incrustations on the projecting part of the gas spring piston ring.

## Claims

1. A gas spring, comprising a hollow cylinder (1) which slidingly receives internally a piston (21) subjected to the action of a pressurized gas, and of which the head (13) is traversed by the piston ring by way of interposed seal means, **characterised by** comprising a cleaning member (5) which is associated with the open end of the cylinder and is positioned to circumscribe the initial portion of the projecting part of the piston rod in such a manner as to detach the deposits present on it as it retracts.

2. A gas spring as claimed in claim 1, **characterised in that** said cleaning member is in the form of a ring surrounding said initial piston rod portion.

3. A gas spring as claimed in claim 2, **characterised in that** said ring consists of a material not particularly resistant, such as bronze or brass.

4. A gas spring as claimed in claim 2, **characterised in that** said ring is mounted on said piston rod as a particularly precise sliding fit.

5. A gas spring as claimed in claim 4, **characterised in that** the tolerance between said ring and said piston rod is of the order of 0.01 mm, said tolerance referring to the most critical temperature present in the environment in which the gas spring is installed.

6. A gas spring as claimed in claim 1, **characterised in that** between said head and said cleaning member there is interposed an annular chamber which surrounds the initial portion of the projecting part of the piston rod.

7. A gas spring as claimed in claim 6, **characterised in that** said annular chamber is filled with a lubricant fluid.

8. A gas spring as claimed in claim 6, **characterised in that** said chamber is formed by a sleeve which at one end is sealedly fixed to said cylinder, and at its other end presents at least one seal element.

9. A gas spring as claimed in claim 8, **characterised in that** said seal clement is locked in position by said cleaning member.

10. A gas spring as claimed in claim 6, **characterised in that** said chamber is provided with a bleed valve.

11. A gas spring as claimed in claim 10, **characterised in that** said bleed valve comprises at least one through radial hole which is provided in the wall of the sleeve and opens into a circumferential groove provided in the outer surface of said sleeve, said groove having a circular arc cross-section, and containing in a stretched state an elastic seal ring of circular cross-section.
